# EUROPEAN PATENT APPLICATION

(11) **EP 4 273 718 A1**
(43) Date of publication of application: **08.11.2023**
(21) Application number: 21924558.6
(22) Date of filing: 02.02.2021
(51) Int. Cl.: G06F 17/10

(54) **CALCULATION CIRCUIT, COMMUNICATION DEVICE, CONTROL CIRCUIT, STORAGE MEDIUM AND CALCULATION METHOD**

(71) Applicant: MITSUBISHI ELECTRIC CORPORATION, Chiyoda-ku Tokyo 100-8310 (JP)
(72) Inventor: TANI, Shigenori, Tokyo 100-8310 (JP); YAMASHITA, Yasutaka, Tokyo 100-8310 (JP)
(74) Representative: Plasseraud IP
(86) International application number: PCT/JP2021/003728
(87) International publication number: WO 2022/168161

(57) **Abstract**

A calculation circuit (10) includes: a conversion unit (100) that divides a quantized signal into a first bit string and a second bit string, and converts the first bit string into a sequence including two or more bits and representing a numerical value by a ratio of 1 present therein; a calculation unit (200) that calculates the sequence converted by the conversion unit (100) by stochastic signal processing using a combinational circuit; and a reconversion unit (300) that adds a ratio of 1 present in a sequence after calculation by the calculation unit (200) and a value obtained by multiplying the second bit string by a number represented by the first bit string, and performs reconversion into a quantized signal.

## Description

### Field

The present disclosure relates to a calculation circuit that performs a multiply-accumulate operation by stochastic signal processing, a communication device, a control circuit, a storage medium, and a calculation method.

### Background

With an increasing demand for communication, it is required for communication devices used for cellular systems, satellite communication, and the like to improve frequency use efficiency. In order to improve the frequency use efficiency, it is desirable to flexibly control radio resources such as frequency, time, and power depending on changes in propagation paths, demands for communication, and the like, in addition to increasing a bandwidth of signal processing. Such communication devices realize advanced and high-speed signal processing by using digital devices including an application specific integrated circuit (ASIC) and a field programmable gate array (FPGA).

In a digital device that performs digital signal processing, there occurs a soft error, for example, values of bits in an internal circuit are flipped due to radiation. For a satellite-mounted device, a space-dedicated device with enhanced soft error tolerance is often used, but such a space-dedicated device is inferior to consumer devices widely used on the ground in terms of cost, performance, and the like. Therefore, if it is possible to improve the soft error tolerance of consumer devices and to use such consumer devices for space applications, higher performance and lower cost of satellites can be expected. Furthermore, since not only a satellite-mounted device but also a device on the ground is affected to some extent by a soft error due to radiation, improvement of soft error tolerance is required for mission critical devices.

As a technique that can be expected to improve soft error tolerance, there is stochastic signal processing. In a conventional binary operation, the closer to a most significant bit (MSB), the greater a numerical error due to bit flipping, whereas in the stochastic signal processing, a calculation is performed by representing a numerical value by the ratio between "0" and "1" in random numbers of a sequence length N. Thus, in the stochastic signal processing, there is no weight between bits, and improvement in soft error tolerance can be expected. In addition, the stochastic signal processing has a feature that a circuit configuration for addition, multiplication, or the like can be simplified, and a digital filter etc. using stochastic signal processing have been studied in Non Patent Literature 1.

### Citation List

### Non Patent Literature

Non Patent Literature 1: H. Ichihara, T. Sugino, S. Ishii, T. Iwagaki and T. Inoue, "Compact and Accurate Digital Filters Based on Stochastic Computing", in IEEE Transactions on Emerging Topics in Computing. DOI: 10.1109/TETC.2 016.2 60882 5

### Summary

### Technical Problem

Since a digital payload including a channelizer processes a signal having a bandwidth wider than a bandwidth that can be processed at an operation speed of a device, parallel processing depending on a sequence length is required. Conventional stochastic signal processing has a trade-off characteristic that a circuit scale can be reduced by reducing a sequence length, but the granularity of numerical conversion becomes coarse and calculation errors increase. Since allowable communication performance is generally defined in a communication device, a shortest sequence length that meets a calculation error corresponding to the communication performance is uniquely determined, and thus it is difficult to reduce a circuit scale, which is a problem.

The present disclosure has been made in view of the above, and an object thereof is to obtain a calculation circuit capable of improving soft error tolerance while preventing or reducing increase of a circuit scale.

### Solution to Problem

To solve the above problem and achieve an object, a calculation circuit according to the present disclosure includes: a conversion unit to divide a quantized signal into a first bit string and a second bit string, and to convert the first bit string into a sequence including two or more bits and representing a numerical value by a ratio of 1 present therein; a calculation unit to calculate the sequence converted by the conversion unit by stochastic signal processing using a combinational circuit; and a reconversion unit to add a ratio of 1 present in a sequence after calculation by the calculation unit and a value obtained by multiplying the second bit string by a number represented by the first bit string, and to perform reconversion into a quantized signal.

### Advantageous Effects of Invention

The calculation circuit according to the present disclosure achieves an effect that it is possible to improve soft error tolerance while preventing or reducing increase of a circuit scale.

### Brief Description of Drawings

FIG. 1 is a diagram illustrating an example configuration of a calculation circuit according to a first embodiment.
FIG. 2 is a diagram illustrating an example configuration of a conversion unit according to the first embodiment.
FIG. 3 is a diagram illustrating an example of conversion performed by the conversion unit according to the first embodiment.
FIG. 4 is a diagram illustrating an example configuration of a calculation unit according to the first embodiment.
FIG. 5 is a diagram illustrating an example configuration of an SS multiplication unit included in the calculation unit according to the first embodiment.
FIG. 6 is a diagram illustrating an example calculation performed by the SS multiplication unit included in the calculation unit according to the first embodiment.
FIG. 7 is a diagram illustrating an example configuration of a BS multiplication unit included in the calculation unit according to the first embodiment.
FIG. 8 is a diagram illustrating an example configuration of a parallel multiplication unit included in the BS multiplication unit according to the first embodiment.
FIG. 9 is a diagram illustrating an example calculation performed by the BS multiplication unit included in the calculation unit according to the first embodiment.
FIG. 10 is a diagram illustrating an example configuration of an SS addition unit included in the calculation unit according to the first embodiment.
FIG. 11 is a diagram illustrating an example calculation performed by the SS addition unit included in the calculation unit according to the first embodiment.
FIG. 12 is a diagram illustrating an example configuration of a BS addition unit included in the calculation unit according to the first embodiment.
FIG. 13 is a diagram illustrating an example calculation performed by the BS addition unit included in the calculation unit according to the first embodiment.
FIG. 14 is a flowchart illustrating an operation of the calculation circuit according to the first embodiment.
FIG. 15 is a diagram illustrating an example configuration of a processing circuitry in a case where a processing circuitry included in the calculation circuit according to the first embodiment is realized by a processor and a memory.
FIG. 16 is a diagram illustrating an example of a processing circuitry in a case where the processing circuitry included in the calculation circuit according to the first embodiment is configured with dedicated hardware.
FIG. 17 is a diagram illustrating an example configuration of a communication device including a calculation circuit according to a second embodiment.
FIG. 18 is a diagram illustrating an example configuration of a calculation unit included in the calculation circuit that realizes a finite impulse response (FIR) filter according to the second embodiment.
FIG. 19 is a diagram illustrating an example configuration of a delay register unit included in the calculation unit of the calculation circuit according to the second embodiment.
FIG. 20 is a diagram illustrating an example configuration of a shift register unit included in the calculation unit of the calculation circuit according to the second embodiment.
FIG. 21 is a diagram illustrating an example configuration of a multiply-accumulate operation unit included in the calculation unit of the calculation circuit according to the second embodiment.
FIG. 22 is a diagram illustrating an example of a relationship between the number of binary bits and calculation errors in the calculation circuit according to the second embodiment.

### Description of Embodiments

Hereinafter, a calculation circuit, a communication device, a control circuit, a storage medium, and a calculation method according to each embodiment of the present disclosure will be described in detail with reference to the drawings.

### First Embodiment.

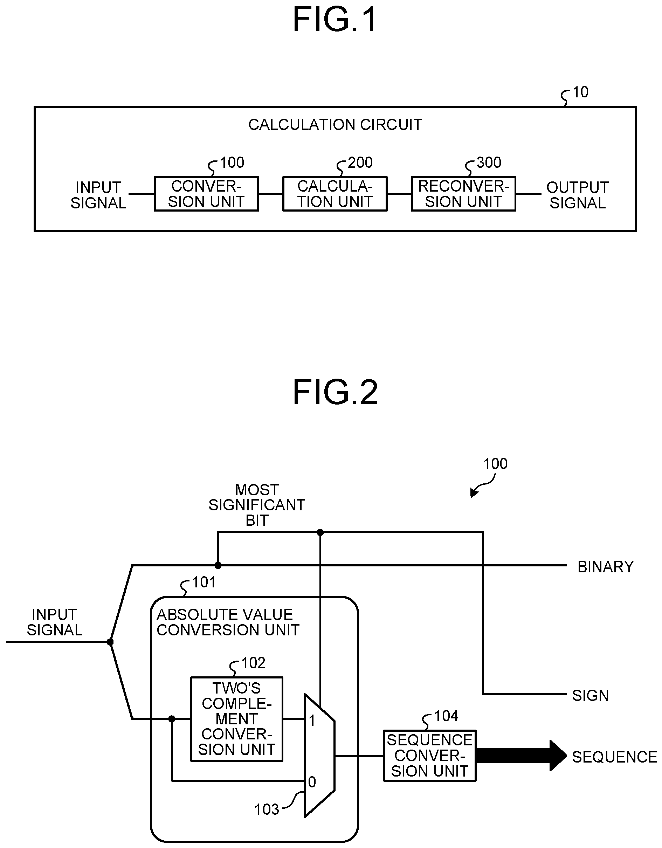

FIG. 1 is a diagram illustrating an example configuration of a calculation circuit 10 according to a first embodiment. The calculation circuit 10 includes a conversion unit 100, a calculation unit 200, and a reconversion unit 300.

First, a configuration and operation of the conversion unit 100 will be described. The conversion unit 100 divides a quantized signal into a first bit string and a second bit string. The conversion unit 100 then converts the first bit string into a sequence that includes two or more bits and represents a numerical value by a ratio of "1" present therein. FIG. 2 is a diagram illustrating an example configuration of the conversion unit 100 according to the first embodiment. The conversion unit 100 includes an absolute value conversion unit 101 and a sequence conversion unit 104. The absolute value conversion unit 101 includes a two's complement conversion unit 102 and a selector 103. An input signal input to the calculation circuit 10, that is, the conversion unit 100, is a quantized binary signal. The conversion unit 100 divides a binary which is an input signal into high-order bits and low-order bits. The conversion unit 100 outputs the high-order bits as they are as a binary. In addition, the conversion unit 100 extracts a most significant bit among the high-order bits as a sign bit and outputs the sign bit.

The low-order bits are input to the absolute value conversion unit 101. With respect to the input low-order bits, the absolute value conversion unit 101 outputs a binary based on a value of the most significant bit. In the absolute value conversion unit 101, the two's complement conversion unit 102 converts the low-order bits into two's complement and outputs the two's complement. The selector 103 selects a value to be output on the basis of the value of the most significant bit. Specifically, when the most significant bit is 1, that is, the input signal has a negative value, the selector 103 outputs a binary converted by the two's complement conversion unit 102. When the most significant bit is 0, that is, the input signal has a positive value, the selector 103 outputs a binary of the low-order bits as it is.

The sequence conversion unit 104 converts the binary output from the absolute value conversion unit 101 into a data sequence for calculation by stochastic signal processing and outputs the data sequence. In the following description, the data sequence is simply referred to as a sequence. The conversion performed by the sequence conversion unit 104 means that a value represented by a binary is converted into a stochastic number in the stochastic signal processing. The sequence conversion unit 104 converts the binary so that a value normalized in a value range of 0 to 1 is approximated to the probability that "1" appears in the sequence. The sequence conversion unit 104 can use a low discrepancy, a pseudo random number, or the like as a sequence generation method. The sequence conversion unit 104 may generate the sequence each time using a generator polynomial or the like, or may hold a table indicating correspondence between binary values and sequences in advance and obtain the sequence with reference to the table.

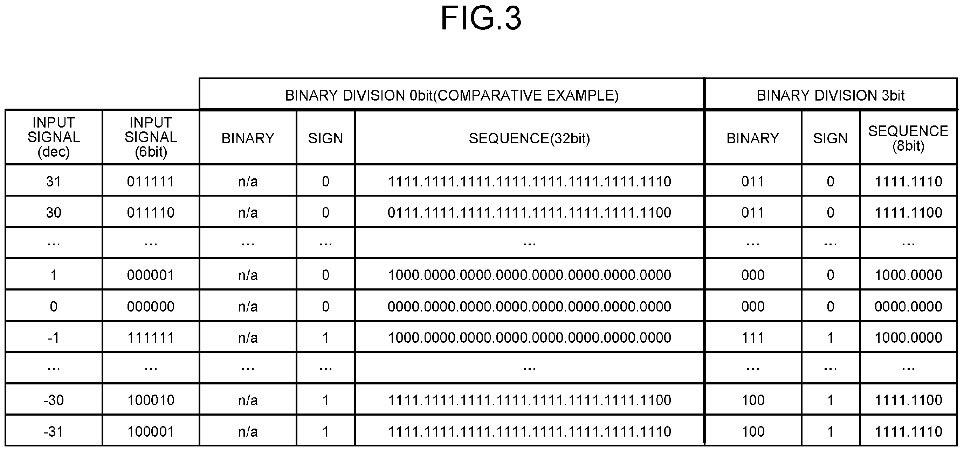

FIG. 3 is a diagram illustrating an example of conversion performed by the conversion unit 100 according to the first embodiment. The input signal is a 6-bit signed binary. A case where division into the high-order bits and the low-order bits is not performed in the stochastic signal processing, which is a comparative example, is equivalent to when the number of bits divided into the high-order bits is zero bits in the present embodiment. In FIG. 3, "n/a" of the binary of the comparative example represents "no assign". In that case, the number of bits of a sequence required for numerical representation with the same accuracy as 5 bits excluding the most significant bit indicating the sign is 2⁵-1=31 bits or more, and the sequence is represented as a sequence in which the number of 1's appearing is equal to the input signal (dec). Note that the arrangement of 0s and 1s in the sequence is not limited to the example in FIG. 3, and it is possible to employ arrangement obtained by using the low discrepancy, the pseudo random number, or the like as described above.

On the other hand, when the 6 bits of the input signal are divided into 3 bits of the high-order bits and 3 bits of the low-order bits, the conversion unit 100 outputs the 3 bits of the high-order bits out of the 6 bits of the input signal as a binary as they are, and outputs a sequence in which the number of 1's appearing is equal to the absolute value of the 3 bits of the low-order bits, as a sequence. In that case, the number of bits required for the numerical representation of the 3 bits which are the low-order bits is 2³-1=7 bits or more. That is, in the example in FIG. 3, the conversion of the 6-bit binary requires 33 bits including the sign in the comparative example, whereas by dividing the 6 bits of the input signal into the 3 bits of the high-order bits and the 3 bits of the low-order bits, the representation is enabled by a total of 12 bits of a 3-bit binary, a 1-bit sign, and an 8-bit sequence.

Note that, since soft error tolerance of the binary to be output is not ensured, the conversion unit 100 may make the binary redundant. For example, the conversion unit 100 may incorporate triple redundancy and majority decision. In that case, the binary to be output from the conversion unit 100 triples to 9 bits, and a total of 19 bits including 1 bit for majority decision is required, but the number of bits can be reduced as compared with 33 bits of the comparative example.

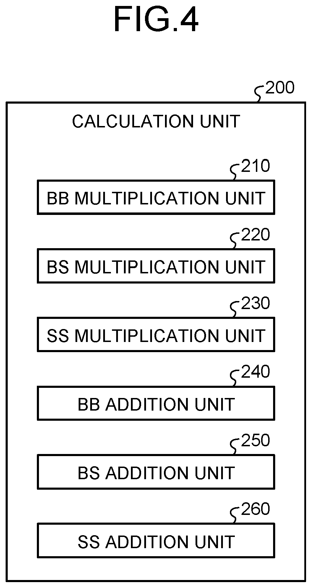

Next, a configuration and operation of the calculation unit 200 will be described. The calculation unit 200 calculates the sequence converted by the conversion unit 100 by the stochastic signal processing using a combinational circuit. FIG. 4 is a diagram illustrating an example configuration of the calculation unit 200 according to the first embodiment. The calculation unit 200 includes a BB multiplication unit 210, a BS multiplication unit 220, an SS multiplication unit 230, a BB addition unit 240, a BS addition unit 250, and an SS addition unit 260. Here, regarding the application of general digital signal processing, such digital signal processing is used to implement functions such as image processing and modulation/demodulation. The digital signal processing is implemented by a combinational circuit, and multiplication and addition are often used. Note that, FIG. 4 illustrates an example in which the calculation unit 200 includes one block for each of the configurations, but it is not limited thereto. The calculation unit 200 may include a plurality of blocks having identical configurations depending on the use application of the device on which the calculation circuit 10 is to be mounted. In addition, the calculation circuit 10 may include another circuit such as a combinational circuit having a configuration other than that illustrated in FIG. 4.

In the present embodiment, the calculation unit 200 can be configured by a combinational circuit, and components for multiplication and addition will be described below. In the following description, when two values are multiplied or added for binaries, signs, and sequences output from the conversion unit 100, a binary of a first value is denoted by b1, a sign and a sequence of a first value are each denoted by s1, a binary of a second value is denoted by b2, and a sign and a sequence of a second value are each denoted by s2. In addition, for the simplicity of the description, the first value is referred to as input 1, and the second value is referred to as input 2.

First, a case will be described where multiplication of two values is performed. When two values are multiplied, the type of calculation is classified into b1×b2 which is multiplication of binaries, b1×s2 and b2×s1 that are each multiplication of a binary and a sequence, and s1×s2 which is multiplication of sequences. Among them, BB multiplication which is the multiplication of binaries corresponds to normal multiplication, and thus the description of the BB multiplication unit 210 that performs the BB multiplication will be omitted. Hereinafter, the BS multiplication unit 220 that performs BS multiplication which is the multiplication of a binary and a sequence, and the SS multiplication unit 230 that performs SS multiplication which is the multiplication of sequences will be described.

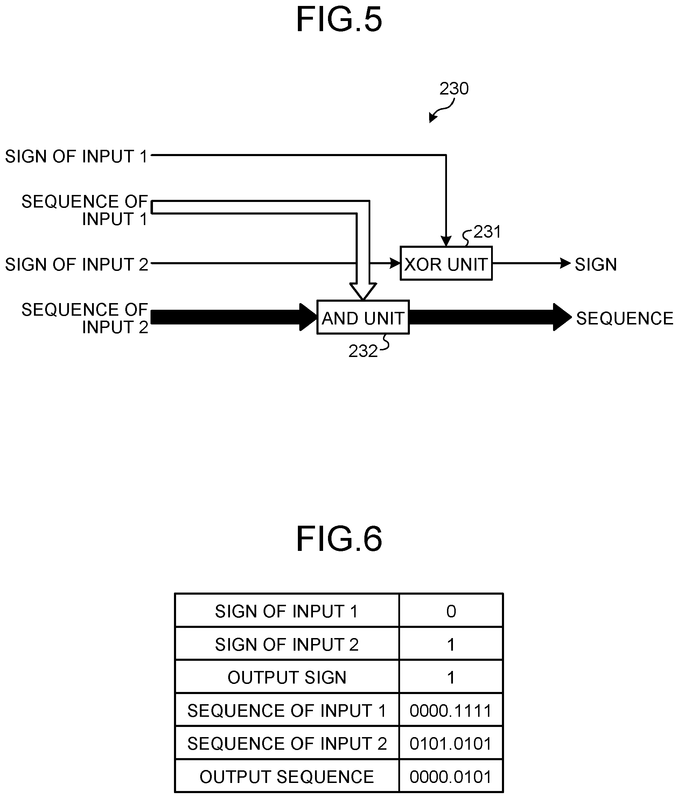

FIG. 5 is a diagram illustrating an example configuration of the SS multiplication unit 230 included in the calculation unit 200 according to the first embodiment. FIG. 6 is a diagram illustrating an example calculation performed by the SS multiplication unit 230 included in the calculation unit 200 according to the first embodiment. The SS multiplication unit 230 includes an XOR unit 231 and an AND unit 232. The XOR unit 231 performs an exclusive logical disjunction operation, that is, an XOR operation, of the sign of the input 1 and the sign of the input 2, and outputs a sign bit. The AND unit 232 performs a logical conjunction operation, that is, an AND operation, of the sequence of the input 1 and the sequence of the input 2 in parallel to obtain an output sequence. FIG. 6 illustrates an example calculation of 0.5×-0.5=-0.25. The sign bit output from the XOR unit 231, that is, an output sign, is "1" (negative) since the input 1 is "0" (positive) and the input 2 is "1" (negative). In addition, both the sequence of the input 1 and the sequence of the input 2 correspond to "0.5" (4/8) since 4 bits out of 8 bits are "1", and the output sequence after AND corresponds to "0.25" (2/8) since 2 bits out of 8 bits are "1". As described above, the SS multiplication unit 230 multiplies a first sequence by a second sequence, the first sequence being obtained by converting a first bit string that is a division of a first signal, and the second sequence being obtained by converting a first bit string that is a division of a second signal. The SS multiplication unit 230 may be referred to as a first multiplication unit.

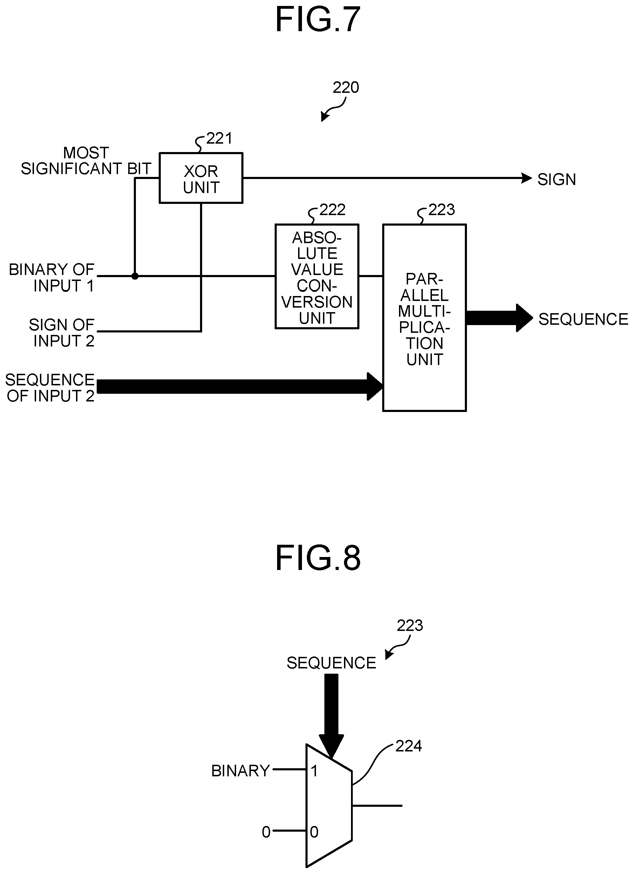

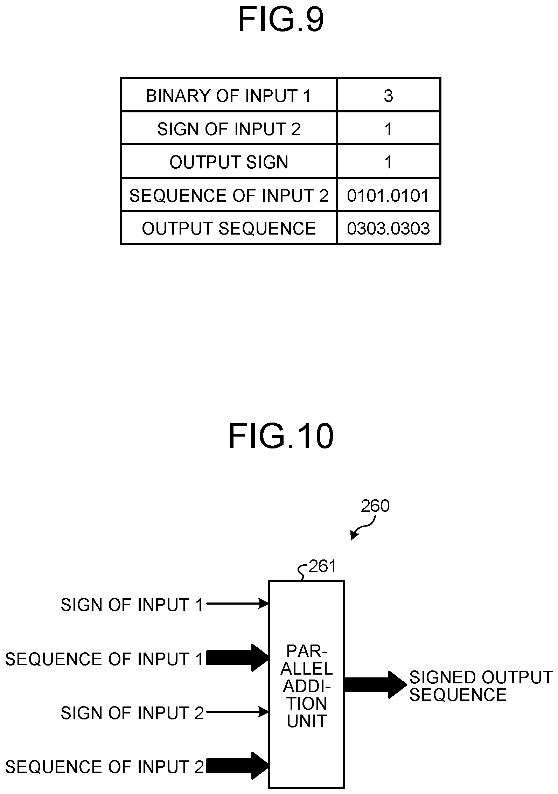

FIG. 7 is a diagram illustrating an example configuration of the BS multiplication unit 220 included in the calculation unit 200 according to the first embodiment. The BS multiplication unit 220 includes an XOR unit 221, an absolute value conversion unit 222, and a parallel multiplication unit 223. FIG. 8 is a diagram illustrating an example configuration of the parallel multiplication unit 223 included in the BS multiplication unit 220 according to the first embodiment. FIG. 9 is a diagram illustrating an example calculation performed by the BS multiplication unit 220 included in the calculation unit 200 according to the first embodiment. The BS multiplication unit 220 extracts a most significant bit of the binary of the input 1 as the sign of the input 1. The XOR unit 221 performs an exclusive logical disjunction operation, that is, an XOR operation, of the sign of the input 1 and the sign of the input 2, and outputs a sign bit. The absolute value conversion unit 222 converts the binary of the input 1 into an absolute value by a configuration similar to that of the absolute value conversion unit 101 included in the conversion unit 100. The parallel multiplication unit 223 performs parallel multiplication of the binary of the input 1 converted by the absolute value conversion unit 222 and the sequence of the input 2. As illustrated in FIG. 8, the parallel multiplication unit 223 can be implemented by a selector 224 that outputs the binary subjected to absolute value conversion by the absolute value conversion unit 222 for "1" in the sequence of the input 2, and outputs "0" for "0" in the sequence of the input 2. As described above, the BS multiplication unit 220 includes the selector 224 that outputs, on the basis of a value of the first sequence, a value obtained by absolute value conversion of the second bit string, or "0", in the parallel multiplication. When the binary of the input 1 converted by the absolute value conversion unit 222 is a power of 2, the parallel multiplication unit 223 may simply perform a bit shift on each element of the sequence without using the selector 224.

FIG. 9 illustrates an operation example of 3×-0.5=-1.5. The sign bit output from the XOR unit 221, that is, an output sign, is "1" (negative) since the input 1 is "0" (positive) and the input 2 is "1" (negative). In addition, both the sequence of the input 1 and the sequence of the input 2 correspond to "0.5" (4/8) since 4 bits out of 8 bits are "1", and an output sequence obtained by tripling each element of the sequence corresponds to "1.5" (12/8) since 4 bits out of 8 bits are "3". As described above, in the multiplication of the first sequence obtained by converting the first bit string that is a division of the first signal and the second bit string that is a division of the second signal, the BS multiplication unit 220 performs parallel multiplication of the first sequence and the value obtained by the absolute value conversion of the second bit string. The BS multiplication unit 220 may be referred to as a second multiplication unit.

Next, a case will be described where addition of two values is performed. When addition of two values is performed, the type of calculation is classified into b1+b2 which is addition of binaries, b1+s2 and b2+s1 that are each addition of a binary and a sequence, and s1+s2 which is addition of sequences. Among them, BB addition which is the addition of binaries corresponds to normal addition, and thus the description of the BB addition unit 240 that performs the BB addition will be omitted. Hereinafter, the BS addition unit 250 that performs BS addition which is the addition of a binary and a sequence, and the SS addition unit 260 that performs SS addition which is the addition of sequences will be described.

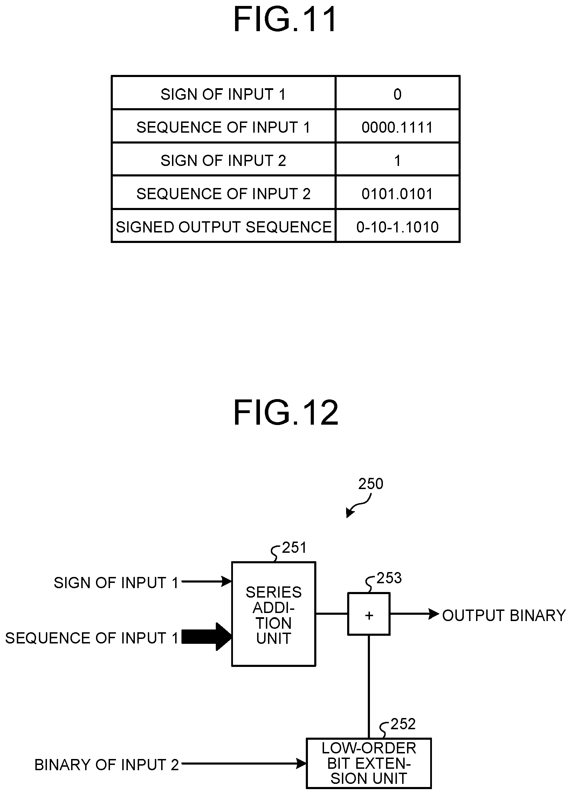

FIG. 10 is a diagram illustrating an example configuration of the SS addition unit 260 included in the calculation unit 200 according to the first embodiment. FIG. 11 is a diagram illustrating an example calculation performed by the SS addition unit 260 included in the calculation unit 200 according to the first embodiment. The SS addition unit 260 includes a parallel addition unit 261. The parallel addition unit 261 adds the sequence of the input 1 and the sequence of the input 2 in parallel in consideration of the sign of each input to obtain a signed output sequence. Each element after the parallel addition output from the parallel addition unit 261 is a signed sequence. FIG. 11 illustrates an example calculation of 0.5+(-0.5)=0.0. The sign of the sequence of the input 1 is "0" (positive) and the sign of the sequence of the input 2 of which the sign is "1" (negative). Each of the input 1 and the input 2 correspond to "0.5" (4/8) since four bits out of eight bits are "1" in both of the input 1 and the input 2. The signed output sequence obtained by the parallel addition unit 261 performing binary addition of each element of the sequence corresponds to "0.0" (0/8) since 2 bits out of 8 bits are "1" and 2 bits out of 8 bits are "-1". As described above, the SS addition unit 260 performs parallel addition of the first sequence and the second sequence, the first sequence being obtained by converting the first bit string that is a division of the first signal, and the second sequence being obtained by converting the first bit string that is a division of the second signal. The SS addition unit 260 may be referred to as a first addition unit.

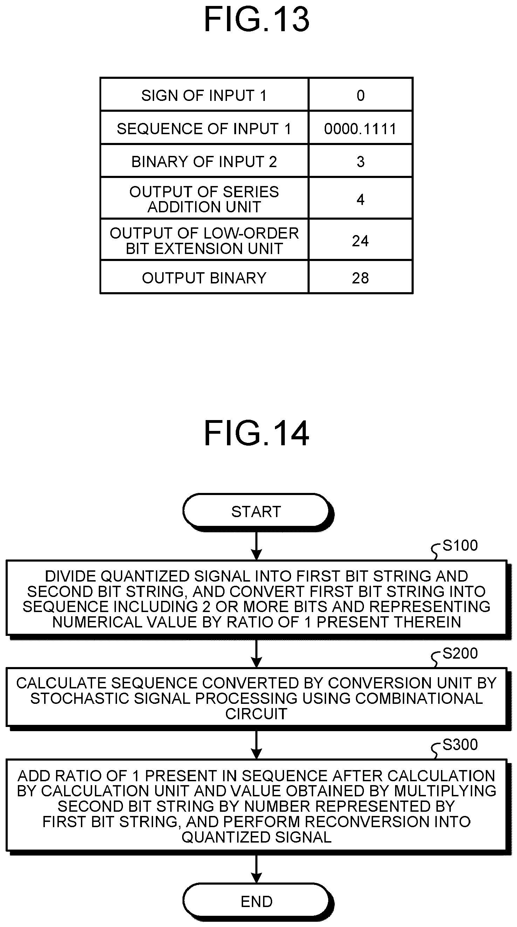

FIG. 12 is a diagram illustrating an example configuration of the BS addition unit 250 included in the calculation unit 200 according to the first embodiment. FIG. 13 is a diagram illustrating an example calculation performed by the BS addition unit 250 included in the calculation unit 200 according to the first embodiment. The BS addition unit 250 includes a series addition unit 251, a low-order bit extension unit 252, and an addition unit 253. The series addition unit 251 adds all the elements in the sequence of the input 1 in consideration of the sign of the input 1. The low-order bit extension unit 252 performs a left-bit-shift on the binary of the input 2. The amount of bits shifted by the low-order bit extension unit 252 is the same as the number of bits of the low-order bits after the division by the conversion unit 100. The addition unit 253 adds a value output from the series addition unit 251 and a value output from the low-order bit extension unit 252 to obtain an output binary. FIG. 13 illustrates an example calculation of 3+0.5=3.5. Since 4 bits out of 8 bits are "1" in the sequence of the input 1, "4" is obtained by series addition by the series addition unit 251. Regarding "3" that is a value represented by the binary of the input 2, the low-order bit extension unit 252 performs extension for 3 bits (8 times) which is the number of bits of the low-order bits after the division to obtain "24". The addition unit 253 obtains an output binary of 4+24=28. Since the output binary is "28", it corresponds to 28/8=3.5. Note that, since the soft error tolerance of the output binary is not ensured, the BS addition unit 250 may make the output binary redundant. As described above, in the addition of the first sequence obtained by converting the first bit string that is a division of the first signal and the second bit string that is a division of the second signal, the BS addition unit 250 adds a ratio of "1" present in the first sequence and a value obtained by multiplying the second bit string by the number represented by the first bit string. The BS addition unit 250 may be referred to as a second addition unit.

Finally, a configuration and operation of the reconversion unit 300 will be described. The reconversion unit 300 adds the ratio of "1" present in the sequence after the calculation by the calculation unit 200 and a value obtained by multiplying the second bit string by the number represented by the first bit string, and performs reconversion into a quantized signal. The reconversion unit 300 reconverts a combination including any of the sign, the binary, and the sequence output from the calculation unit 200 into a binary format which is a format used in the conversion unit 100 and upstream thereof. Since the configuration and operation of the reconversion unit 300 are the same as the configuration and operation of the BS addition unit 250 illustrated in FIG. 12, the descriptions thereof will be omitted.

Note that although it is described that binary representation is used for the high-order bits and stochastic representation applicable to the stochastic signal processing is used for the low-order bits, the present disclosure is not limited thereto. Since the calculation circuit 10 has a characteristics of calculating an input signal by a combination of binary representation and stochastic representation, the calculation circuit 10 may perform the calculation by using the stochastic representation for the high-order bits and using the binary representation for the low-order bits. Also in that case, the calculation circuit 10 can obtain a similar effect.

An operation of the calculation circuit 10 will be described with reference to a flowchart. FIG. 14 is a flowchart illustrating an operation of the calculation circuit 10 according to the first embodiment. In the calculation circuit 10, the conversion unit 100 divides a quantized signal into a first bit string and a second bit string, and converts the first bit string into a sequence including two or more bits and representing a numerical value by the ratio of "1" present therein (step S100). The calculation unit 200 calculates the sequence converted by the conversion unit 100 by the stochastic signal processing using a combinational circuit (step S200). The reconversion unit 300 adds the ratio of "1" present in the sequence after the calculation by the calculation unit 200 and a value obtained by multiplying the second bit string by the number represented by the first bit string, and performs reconversion into a quantized signal (step S300).

Next, a hardware configuration of the calculation circuit 10 will be described. In the calculation circuit 10, the conversion unit 100, the calculation unit 200, and the reconversion unit 300 are implemented by processing circuitry. The processing circuitry may include a memory and a processor that executes a program stored in the memory, or may be dedicated hardware. The processing circuitry is also referred to as a control circuit.

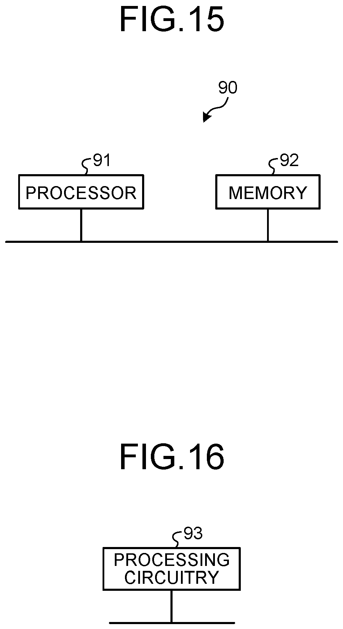

FIG. 15 is a diagram illustrating an example configuration of a processing circuitry 90 when the processing circuitry included in the calculation circuit 10 according to the first embodiment is implemented by a processor 91 and a memory 92. The processing circuitry 90 illustrated in FIG. 15 is a control circuit, and includes the processor 91 and the memory 92. When the processing circuitry 90 is constituted with the processor 91 and the memory 92, functions of the processing circuitry 90 are realized by software, firmware, or a combination of software and firmware. The software or the firmware is described as a program and stored in the memory 92. In the processing circuitry 90, the processor 91 reads and executes the program stored in the memory 92, thereby realizing the functions. That is, the processing circuitry 90 includes the memory 92 for storing a program with which a process of the calculation circuit 10 is executed as a result. It can also be said that this program is a program for causing the calculation circuit 10 to execute the functions realized by the processing circuitry 90. This program may be provided by a storage medium having the program stored therein, or may be provided by other means such as a communication medium.

It can also be said that the program is a program that causes the calculation circuit 10 to execute: a first step of, by the conversion unit 100, dividing a quantized signal into a first bit string and a second bit string, and converting the first bit string into a sequence including two or more bits and representing a numerical value by the ratio of "1" present therein; a second step of, by the calculation unit 200, calculating the sequence converted by the conversion unit 100 by the stochastic signal processing using a combinational circuit; and a third step of, by the reconversion unit 300, adding the ratio of "1" present in the sequence after calculation by the calculation unit 200 and a value obtained by multiplying the second bit string by the number represented by the first bit string, and performing reconversion into a quantized signal.

Here, the processor 91 is, for example, a central processing unit (CPU), a processing device, a calculation device, a microprocessor, a microcomputer, a digital signal processor (DSP), or the like. The memory 92 corresponds to, for example, a non-volatile or volatile semiconductor memory such as a random access memory (RAM), a read only memory (ROM), a flash memory, an erasable programmable ROM (EPROM), or an electrically EPROM (EEPROM (registered trademark)), a magnetic disk, a flexible disk, an optical disk, a compact disc, a mini disk, or a digital versatile disc (DVD).

FIG. 16 is a diagram illustrating an example of processing circuitry 93 when the processing circuitry included in the calculation circuit 10 according to the first embodiment is configured with dedicated hardware. The processing circuitry 93 illustrated in FIG. 16 corresponds to, for example, a single circuit, a composite circuit, a programmed processor, a parallel programmed processor, an ASIC, an FPGA, or a combination thereof. A part of the processing circuitry may be implemented by dedicated hardware and another part thereof may be implemented by software or firmware. Thus, the processing circuitry can realize each of the above-described functions by dedicated hardware, software, firmware, or a combination thereof.

As described above, according to the present embodiment, in the process of multiplication and addition in the stochastic signal processing, the calculation circuit 10 divides the quantized signal into the high-order bits and the low-order bits, and converts one thereof into the binary representation and the other thereof into the stochastic representation, that is, converts only a part of the quantized signal into a sequence of the stochastic representation, and thereby it is possible to prevent or reduce increase of the sequence length of a calculation target in the stochastic signal processing. In addition, the calculation circuit 10 can provide all functions by a combinational circuit by providing a calculation means depending on a combination of a binary and a sequence in multiplication and addition operations.

Consequently, the calculation circuit 10 achieves an effect that desired calculation accuracy and soft error tolerance are obtained and a circuit scale is reduced. The calculation circuit 10 can improve soft error tolerance while preventing or reducing increase of a circuit scale. The calculation circuit 10 can realize soft error tolerance in a consumer FPGA having low radiation tolerance with a small circuit scale to improve reliability of a satellite-mounted device, a device on the ground, and the like.

### Second Embodiment.

In the first embodiment, the descriptions have been given for the basic configuration of the calculation circuit 10 and the specific configuration and operation when the calculation unit 200 performs multiplication and addition. In a second embodiment, a case will be described where a calculation circuit mounted on a communication device realizes an FIR filter.

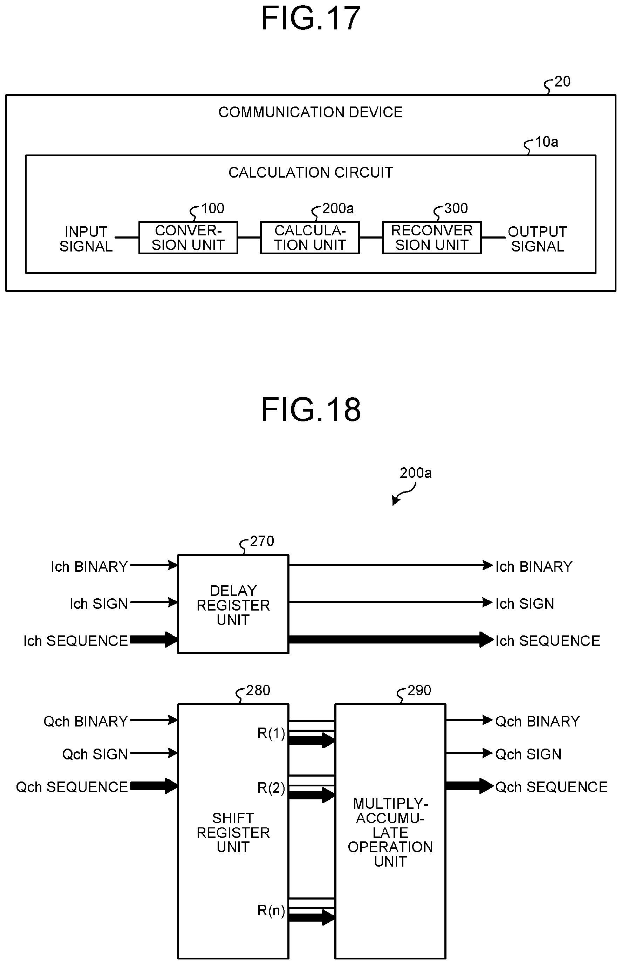

FIG. 17 is a diagram illustrating an example configuration of a communication device 20 including a calculation circuit 10a according to the second embodiment. The communication device 20 includes the calculation circuit 10a. The calculation circuit 10a realizes the FIR filter as described above. The calculation circuit 10a is obtained by replacing the calculation unit 200 in the calculation circuit 10 of the first embodiment illustrated in FIG. 1 with a calculation unit 200a. Hereinafter, a specific configuration and operation of the calculation unit 200a included in the calculation circuit 10a that realizes the FIR filter will be described.

FIG. 18 is a diagram illustrating an example configuration of the calculation unit 200a included in the calculation circuit 10a that realizes the FIR filter according to the second embodiment. The calculation unit 200a includes a delay register unit 270, a shift register unit 280, and a multiply-accumulate operation unit 290. A general FIR filter performs a convolution operation by a multiply-accumulate operation for each of Ich and Qch of a baseband signal with a tap coefficient on a signal delayed by a shift register. FIG. 18 illustrates an example configuration of the calculation unit 200a that realizes a half-band filter which is a type of FIR filter. In the half-band filter, the tap coefficient becomes "0" every other tap from a center tap, so that there is no need to perform a calculation on a portion where the tap coefficient becomes "0". Therefore, the calculation unit 200a is only required to delay an Ich signal of the baseband signal to the center tap by the delay register unit 270. The calculation unit 200a convolves a Qch signal of the baseband signal by the shift register unit 280 and the multiply-accumulate operation unit 290. Both the Ich signal and the Qch signal of the baseband signal are represented in three ways, i.e., by a binary, a sign, and a sequence so that an input signal passes through the conversion unit 100 of the calculation circuit 10a and an output signal passes through the reconversion unit 300 of the calculation circuit 10a. In the following description, the Ich may be referred to as an I channel, and the Qch may be referred to as a Q channel.

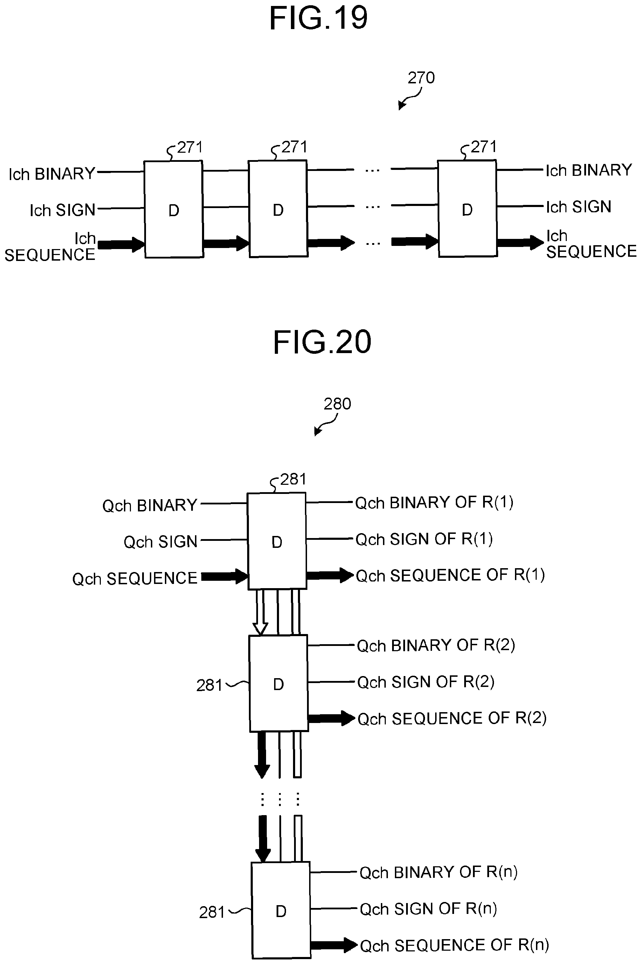

FIG. 19 is a diagram illustrating an example configuration of the delay register unit 270 included in the calculation unit 200a of the calculation circuit 10a according to the second embodiment. The delay register unit 270 delays each of the binary, the sign, and the sequence of the Ich of the baseband signal by a plurality of delay elements 271 until a timing of the center tap is reached. The delay elements 271 are flip-flops, for example. As described above, the delay register unit 270 delays the sequence obtained by converting the first bit string of an I-channel signal of the baseband signal and the second bit string.

FIG. 20 is a diagram illustrating an example configuration of the shift register unit 280 included in the calculation unit 200a of the calculation circuit 10a according to the second embodiment. The basic idea of the shift register unit 280 is the same as that of a general shift register, and n pieces of time-shifted data are simultaneously output by connecting a plurality of delay elements 281 in a cascade, and sequentially moving the binary, the sign, and the sequence of the Qch of the baseband signal. Here, n corresponds to the number of taps of the FIR filter. As described above, the shift register unit 280 delays the sequence obtained by converting the first bit string of a Q-channel signal of the baseband signal and the second bit string, and outputs pluralities of sequences and second bit strings having different delay amounts for the Q-channel signal of the baseband signal.

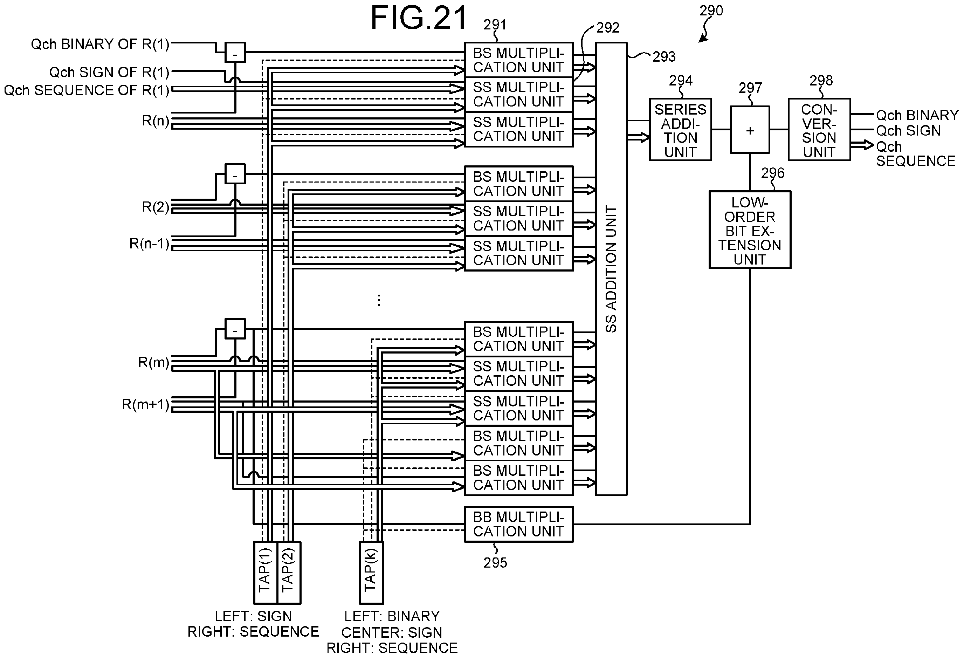

FIG. 21 is a diagram illustrating an example configuration of the multiply-accumulate operation unit 290 included in the calculation unit 200a of the calculation circuit 10a according to the second embodiment. The multiply-accumulate operation unit 290 includes a plurality of BS multiplication units 291, a plurality of SS multiplication units 292, an SS addition unit 293, a series addition unit 294, a BB multiplication unit 295, a low-order bit extension unit 296, an addition unit 297, and a conversion unit 298. The multiply-accumulate operation unit 290 performs a multiply-accumulate operation of the n Qch binaries, signs, and sequences output from the shift register unit 280 and the tap coefficients. Here, since the half-band filter has symmetrical tap coefficients and thus a first input R(1) and an n-th input R(n) can be multiplied by the same tap coefficient, the multiply-accumulate operation unit 290 performs the following three types of multiplication.
(1) BS multiplication of the sum of a binary of the input R(1) and a binary of the input R(n), and a tap sequence of a first tap TAP(1).
(2) SS multiplication of a sequence of the input R(1) and the tap sequence of the tap TAP (1) .
(3) SS multiplication of a sequence of an input R(2) and the tap sequence of the tap TAP(1).

Similarly, the multiply-accumulate operation unit 290 performs a calculation dealing with two shift register outputs present at symmetrical positions with respect to the center tap as one group. Note that the calculation circuit 10a can also divide a tap coefficient into high-order bits and low-order bits as described in the first embodiment, and regarding a tap coefficient close to the center of an impulse response and exceeding "1", the calculation accuracy can be improved by using both a binary and a sequence. In the example in FIG. 21, the tap coefficient of a k-th tap TAP(k) corresponds to the above tap coefficient. Since the tap coefficient of the tap TAP(k), an input R(m), and an input R(m+1) all have a binary and a sequence, the multiply-accumulate operation unit 290 performs the following six types of multiplication.
(1) BS multiplication of the sum of a binary of the input R(m) and a binary of the input R(m+1), and a tap sequence of the k-th tap TAP(k).
(2) SS multiplication of a sequence of the input R(m) and the tap sequence of the tap TAP(k).
(3) SS multiplication of a sequence of the input R(m+1) and the tap sequence of the tap TAP(k).
(4) BS multiplication of the sequence of the input R(m) and a binary of the k-th tap TAP(k).
(5) BS multiplication of the sequence of the input R(m+1) and the binary of the k-th tap TAP(k).
(6) BB multiplication of the sum of the binary of the input R(m) and the binary of the input R(m+1), and the binary of the tap TAP(k).

The BS multiplication is performed by the BS multiplication units 291, the SS multiplication is performed by the SS multiplication units 292, and the BB multiplication is performed by the BB multiplication unit 295. The BS multiplication units 291 each have a configuration similar to that of the BS multiplication unit 220 of the first embodiment, the SS multiplication units 292 each have a configuration similar to that of the SS multiplication unit 230 of the first embodiment, and the BB multiplication unit 295 has a configuration similar to that of the BB multiplication unit 210 of the first embodiment. Therefore, the descriptions of detailed contents of the calculations will be omitted.

The BS multiplication units 291 and the SS multiplication units 292 output signs and sequences after the calculation to the SS addition unit 293. The SS addition unit 293 has a configuration similar to that of the SS addition unit 260 of the first embodiment. Regarding the signs and the sequences acquired from the pluralities of BS multiplication units 291 and SS multiplication units 292, the SS addition unit 293 performs addition for each of sequence elements. Regarding a sign and a sequence from the SS addition unit 293, the series addition unit 294 adds all the elements in the sequence in consideration of the sign by a calculation similar to that performed by the series addition unit 251 of the first embodiment.

The BB multiplication unit 295 outputs a binary after the calculation to the low-order bit extension unit 296. The low-order bit extension unit 296 performs a left-bit-shift on a binary output from the BB multiplication unit 295. The amount of bits shifted by the low-order bit extension unit 296 is the same as the number of bits of the low-order bits after the division by the conversion unit 100. The addition unit 297 adds a binary output from the series addition unit 294 and a binary output from the low-order bit extension unit 296. Thus, the multiply-accumulate operation unit 290 can obtain a binary output of the multiply-accumulate operation. Note that when there is other signal processing in a subsequent stage of the FIR filter, the multiply-accumulate operation unit 290 converts a binary output from the addition unit 297 into a binary, a sign, and a sequence again by the conversion unit 298.

Where the tap coefficient is a fixed value, the selector 224 of the parallel multiplication unit 223 can be used as illustrated in FIG. 8 for the BS multiplication units 291 that perform the BS multiplication of the binary of the tap coefficient and the sequence of the shift register output. In addition, when the tap coefficient is a power of 2 or ±1, the multiply-accumulate operation unit 290 can be implemented by a bit shift unit, a NOT circuit, or the like. As described above, the multiply-accumulate operation unit 290 performs a multiply-accumulate operation of pluralities of sequences and second bit strings having different delay amounts output from the shift register unit 280. The multiply-accumulate operation unit 290 performs a calculation of, among the pluralities of sequences and second bit strings output from the shift register unit 280, those having a tap coefficient same as a corresponding tap coefficient of the half-band filters as one group.

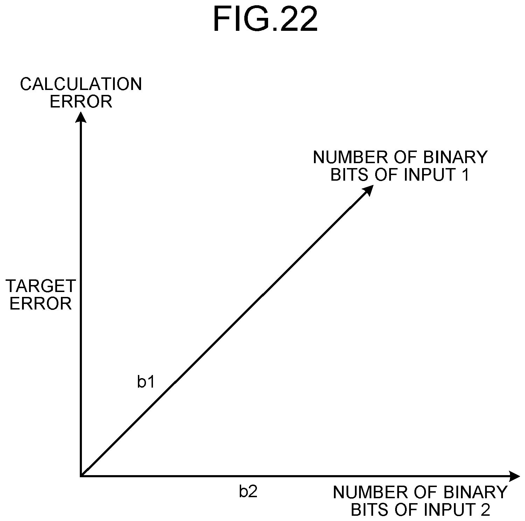

Here, a method for performing division into the high-order bits and the low-order bits by the conversion unit 100 of the calculation circuit 10a can be determined depending on a trade-off among the circuit scale of the calculation circuit 10a or the communication device 20 on which the calculation circuit 10a is mounted, an allowable calculation error, and error tolerance. For example, a designer of the calculation circuit 10a can evaluate, by simulation or the like, the number of high-order bits necessary for making a calculation error within an allowable value, and adopt a configuration in which the circuit scale is minimized. In addition, as illustrated in FIG. 22, when the tap coefficient is set as input 1 and the shift register output is set as input 2, there is a trade-off also between distribution of the high-order bits (binary bits) of the tap coefficient (input 1) and the shift register output (input 2) similarly, so that the designer of the calculation circuit 10a can perform evaluation by simulation or the like, and adopt a configuration in which the circuit scale is minimized. FIG. 22 is a diagram illustrating an example of a relationship between the number of binary bits and calculation errors in the calculation circuit 10a according to the second embodiment. The relationship illustrated in FIG. 22 also holds for the calculation circuit 10 of the first embodiment. As described above, the numbers of bits of the first bit string and the second bit string when the conversion unit 100 divides the quantized signal into the first bit string and the second bit string are determined on the basis of the circuit scales of the calculation circuits 10 and 10a, the calculation errors allowable in the calculation circuits 10 and 10a, and the error tolerances of the calculation circuits 10 and 10a.

Although the half-band filter has been specifically described in the present embodiment as an example of the FIR filter implemented by the calculation circuit 10a, the configuration of the filter is not limited thereto. The calculation circuit 10a can obtain an effect similar to that of the present embodiment even if the configuration is changed to those of various filters that can be realized by digital signal processing.

Although the case has been described where binary representation is used for the high-order bits and stochastic representation applicable to the stochastic signal processing is used for the low-order bits similarly to the first embodiment, the configuration is not limited thereto. Since the calculation circuit 10a has characteristics of calculating an input signal by a combination of binary representation and stochastic representation, the calculation circuit 10a may perform the calculation by using the stochastic representation for the high-order bits and using the binary representation for the low-order bits. Also in that case, the calculation circuit 10a can obtain a similar effect.

As described above, according to the present embodiment, the communication device 20 achieves an effect of reducing a circuit scale of a digital circuit having desired operation accuracy and soft error tolerance by realizing a filter by the calculation circuit 10a that divides an input signal into high-order bits and low-order bits by a method similar to that performed by the calculation circuit 10 of the first embodiment. By the calculation circuit 10a being applied particularly to a circuit that performs a multiply-accumulate operation such as a digital filter, it is possible to improve soft error tolerance and a circuit scale of a communication device configured with a digital device.

The configurations described in the above embodiments are merely examples and can be combined with other known technology, the embodiments can be combined with each other, and part of the configurations can be omitted or modified without departing from the gist thereof.

### Reference Signs List

10, 10a calculation circuit; 20 communication device; 100, 298 conversion unit; 101, 222 absolute value conversion unit; 102 two's complement conversion unit; 103, 224 selector; 104 sequence conversion unit; 200, 200a calculation unit; 210, 295 BB multiplication unit; 220, 291 BS multiplication unit; 221, 231 XOR unit; 223 parallel multiplication unit; 230, 292 SS multiplication unit; 232 AND unit; 240 BB addition unit; 250 BS addition unit; 251, 294 series addition unit; 252, 296 low-order bit extension unit; 253, 297 addition unit; 260, 293 SS addition unit; 261 parallel addition unit; 270 delay register unit; 271, 281 delay element; 280 shift register unit; 290 multiply-accumulate operation unit; 300 reconversion unit.

## Claims

1. A calculation circuit comprising:
a conversion unit to divide a quantized signal into a first bit string and a second bit string, and to convert the first bit string into a sequence including two or more bits and representing a numerical value by a ratio of 1 present therein;
a calculation unit to calculate the sequence converted by the conversion unit by stochastic signal processing using a combinational circuit; and
a reconversion unit to add a ratio of 1 present in a sequence after calculation by the calculation unit and a value obtained by multiplying the second bit string by a number represented by the first bit string, and to perform reconversion into a quantized signal.

2. The calculation circuit according to claim 1, wherein
the calculation unit includes a first multiplication unit that multiplies a first sequence by a second sequence, the first sequence being obtained by converting a first bit string that is a division of a first signal, and the second sequence being obtained by converting a first bit string that is a division of a second signal.

3. The calculation circuit according to claim 1 or 2, wherein
the calculation unit includes a second multiplication unit that, in multiplication of a first sequence obtained by converting a first bit string that is a division of a first signal and a second bit string that is a division of a second signal, performs parallel multiplication of a value obtained by absolute value conversion of the second bit string and the first sequence.

4. The calculation circuit according to claim 3, wherein
the second multiplication unit includes a selector that outputs, on a basis of a value of the first sequence, a value obtained by absolute value conversion of the second bit string, or 0, in the parallel multiplication.

5. The calculation circuit according to any one of claims 1 to 4, wherein
the calculation unit includes a first addition unit that performs parallel addition of a first sequence and a second sequence, the first sequence being obtained by converting a first bit string that is a division of a first signal, and the second sequence being obtained by converting a first bit string that is a division of a second signal.

6. The calculation circuit according to any one of claims 1 to 5, wherein
the calculation unit includes a second addition unit that, in addition of a first sequence obtained by converting a first bit string that is a division of a first signal and a second bit string that is a division of a second signal, adds a ratio of 1 present in the first sequence and a value obtained by multiplying the second bit string by a number represented by the first bit string.

7. The calculation circuit according to any one of claims 1 to 6, wherein
numbers of bits of the first bit string and the second bit string when the conversion unit divides the quantized signal into the first bit string and the second bit string are determined on a basis of a circuit scale of the calculation circuit, a calculation error allowable in the calculation circuit, and error tolerance of the calculation circuit.

8. The calculation circuit according to any one of claims 1 to 7, wherein
in a calculation circuit that implements a filter included in a communication device,
the calculation unit includes: a delay register unit that delays a sequence obtained by converting a first bit string of an I-channel signal of a baseband signal and a second bit string; a shift register unit that delays a sequence obtained by converting a first bit string of a Q-channel signal of the baseband signal and a second bit string, and outputs pluralities of sequences and second bit strings having different delay amounts for a Q-channel signal of the baseband signal; and a multiply-accumulate operation unit that performs a multiply-accumulate operation of the pluralities of sequences and second bit strings having different delay amounts output from the shift register unit.

9. The calculation circuit according to claim 8, wherein
the filter is a half-band filter, and
the multiply-accumulate operation unit performs a calculation of, among pluralities of sequences and second bit strings output from the shift register unit, those having a tap coefficient same as a corresponding tap coefficient of the half-band filters, as one group.

10. A communication device comprising a filter implemented by the calculation circuit according to claim 8 or 9.

11. A control circuit for controlling a calculation circuit, the control circuit causing the calculation circuit to:
divide a quantized signal into a first bit string and a second bit string, and to convert the first bit string into a sequence including two or more bits and representing a numerical value by a ratio of 1 present therein;
calculate the converted sequence by stochastic signal processing using a combinational circuit; and
add a ratio of 1 present in a sequence after calculation and a value obtained by multiplying the second bit string by a number represented by the first bit string, and to perform reconversion into a quantized signal.

12. A storage medium having stored therein a program for controlling a calculation circuit,
the program causing the calculation circuit to:
divide a quantized signal into a first bit string and a second bit string, and to convert the first bit string into a sequence including two or more bits and representing a numerical value by a ratio of 1 present therein;
calculate the converted sequence by stochastic signal processing using a combinational circuit; and
add a ratio of 1 present in a sequence after calculation and a value obtained by multiplying the second bit string by a number represented by the first bit string, and to perform reconversion into a quantized signal.

13. A calculation method performed by a calculation circuit, the calculation method comprising:
a first step of, by a conversion unit, dividing a quantized signal into a first bit string and a second bit string, and converting the first bit string into a sequence including two or more bits and representing a numerical value by a ratio of 1 present therein;
a second step of, by a calculation unit, calculating the sequence converted by the conversion unit by stochastic signal processing using a combinational circuit; and
a third step of, by a reconversion unit, adding a ratio of 1 present in a sequence after calculation by the calculation unit and a value obtained by multiplying the second bit string by a number represented by the first bit string, and performing reconversion into a quantized signal.

14. The calculation method according to claim 13, wherein
in the second step, the calculation unit multiplies a first sequence by a second sequence, the first sequence being obtained by converting a first bit string that is a division of a first signal, and the second sequence being obtained by converting a first bit string that is a division of a second signal.

15. The calculation method according to claim 13 or 14, wherein
in the second step, in multiplication of a first sequence obtained by converting a first bit string that is a division of a first signal and a second bit string that is a division of a second signal, the calculation unit performs parallel multiplication of a value obtained by absolute value conversion of the second bit string and the first sequence.

16. The calculation method according to claim 15, wherein
in the second step, on a basis of a value of the first sequence, the calculation unit outputs a value obtained by absolute value conversion of the second bit string, or 0, in the parallel multiplication.

17. The calculation method according to any one of claims 13 to 16, wherein
in the second step, the calculation unit performs parallel addition of a first sequence and a second sequence, the first sequence being obtained by converting a first bit string that is a division of a first signal, and the second sequence being obtained by converting a first bit string that is a division of a second signal.

18. The calculation method according to any one of claims 13 to 17, wherein
in the second step, in addition of a first sequence obtained by converting a first bit string that is a division of a first signal and a second bit string that is a division of a second signal, the calculation unit adds a ratio of 1 present in the first sequence and a value obtained by multiplying the second bit string by a number represented by the first bit string.

19. The calculation method according to any one of claims 13 to 18, wherein
in the first step, numbers of bits of the first bit string and the second bit string when the conversion unit divides the quantized signal into the first bit string and the second bit string are determined on a basis of a circuit scale of the calculation circuit, a calculation error allowable in the calculation circuit, and error tolerance of the calculation circuit.

20. The calculation method according to any one of claims 13 to 19, wherein
in a calculation circuit that implements a filter included in a communication device,
in the second step, the calculation unit delays a sequence obtained by converting a first bit string of an I-channel signal of a baseband signal and a second bit string, delays a sequence obtained by converting a first bit string of a Q-channel signal of the baseband signal and a second bit string, outputs pluralities of sequences and second bit strings having different delay amounts for a Q-channel signal of the baseband signal, and performs a multiply-accumulate operation of the pluralities of sequences and second bit strings having different delay amounts.

21. The calculation method according to claim 20, wherein
the filter is a half-band filter, and
in the second step, as the multiply-accumulate operation, the calculation unit performs a calculation of, among pluralities of sequences and second bit strings that have been output, those having a tap coefficient same as a corresponding tap coefficient of the half-band filters as one group.
